Europäisches Patentamt

European Patent Office

Office européen des brevets

(19)

(11) **EP 1 146 756 A1**

(12) **EUROPEAN PATENT APPLICATION**

(43) Date of publication:
**17.10.2001 Bulletin 2001/42**

(51) Int Cl.$^7$: **H04Q 7/32**

(21) Application number: **00107714.8**

(22) Date of filing: **11.04.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **SIEMENS AKTIENGESELLSCHAFT**<br>**80333 München (DE)** | (72) Inventors:<br>• **Midtgaard, Erik**<br>**9530 Stovring (DK)**<br>• **Jepsen, Bent**<br>**9700 Bronderslev (DK)** |

(54) **Mobile station and method for dynamic monitoring of neighbouring cells**

(57)     A device and method for dynamic monitoring of neighboring cells by a mobile station in a cellular mobile communications network. A determination is made regarding a level of mobility, e.g., stationary or non-stationary, of the mobile station. Based upon a stationary determination, the mobile station is switched to a stationary mode. The mobile station performs an activity of neighboring cell monitoring less frequently in the stationary mode than in the non-stationary mode.

FIG. 2

EP 1 146 756 A1

# EP 1 146 756 A1

**Description**

<u>Background</u>

The present invention relates to mobile communication systems in general, and, more specifically, to a mobile station capable of dynamic monitoring of neighboring cells in a cellular system.

A mobile station, or terminal, of a mobile communications network in the idle mode must be able to receive incoming calls and be ready to support outgoing calls while moving between network cells. These goals are achieved by means of the following activities:

1. Reception of paging information
2. Monitoring of neighboring cells

Both reception of paging information and monitoring of neighboring cells require the mobile station to be powered-up to a standby state, or idle mode. When the mobile station has nothing to do it enters a powered-down state to conserve battery power and extend the standby time.

In order to save the battery life of a mobile station, the active period during reception of paging and monitoring of neighboring cells is made as short as possible, yet still effective, and all peripheries are powered down when not in use.

Monitoring of neighboring cells is performed to effect mobility between cells of the network. A mobile station in the idle state needs to maintain the best possible conditions for call set-up. Toward this end, the mobile station collects information about surrounding, or neighboring, cells contained in network broadcast information. Based on this information, the mobile station regularly measures quantities which characterize the reception quality of the neighboring cells. This measurement activity is known as neighboring cell monitoring. When a neighboring cell is found more suitable than the serving cell the mobile station performs cell reselection. These measure quantities may include: downlink received signal power, downlink signal-to-interference ratio, and downlink path loss.

As noted above, performing neighboring cell monitoring requires the mobile station to be powered-up. Mobile communications system specifications may not set forth how these idle mode neighboring cell measurements can be performed in an efficient way with respect to power consumption.

A mobile station has interchanging idle and full-power modes during its operation depending upon how the user use of the station. When a mobile station is in idle mode and is moving in a cellular system, it can be characterized by always reselecting the most suitable cell in order to support mobility. The most suitable cell is the cell providing the best possible conditions for call setup. In order to do this, the mobile station continuously keeps track of the current cell and the surrounding neighbors. The power spent on this is constant, regardless of whether the mobile station is moving or remaining stationary in the cellular environment. The continuous monitoring of the most suitable cell causes power loss, or decrease of the battery life. For example, in the Global System Mobile (GSM), this neighbor station monitoring effort ranges from 11% to 36% of the total power "up" time in idle or stationary mode, depending upon the network configuration.

When a mobile station is stationary, i.e., not moving relative to the surrounding cells, there is a reduced need, if any, to support mobility. A mobile station may be stationary for the majority of the time.

<u>Advantages of the Invention</u>

The present invention provides a mobile station and procedure for reducing power consumed for neighboring cell monitoring by adjusting the amount of neighboring cell monitoring activity in accordance with the level of mobility, or movement, of the mobile station. Specifically, the present invention provides a method and device for neighbor station monitoring to effect an extension of the life of the battery of the mobile station, by dynamically selecting the amount of neighboring cell monitoring activity depending on whether the mobile station is stationary or non-stationary.

The present invention further provides a method and device for a mobile station for determining whether the mobile station is stationary or in a stationary mode or stationary condition, i.e., the mobile station is not being moved considerably compared to the surrounding cells and compared to a set of requirements regarding coverage condition.

The present invention further provides a method and device for a mobile station for determining when the mobile station is no longer stationary.

Because a typical mobile station user may be assumed to be stationary for the majority of the time, the present invention may extend battery life significantly by providing a decrease in battery load during stationary conditions.

Drawings

Further advantages of the present invention will become apparent from the claims and the description below, based on the drawings, in which:

Fig. 1 shows a schematic diagram of a mobile station according to the present invention showing portions of three neighboring cells; and

Fig. 2 shows a flow chart showing switching between a non-stationary condition with normal neighbor station monitoring and a stationary condition with reduced neighbor station monitoring according to the present invention.

Description

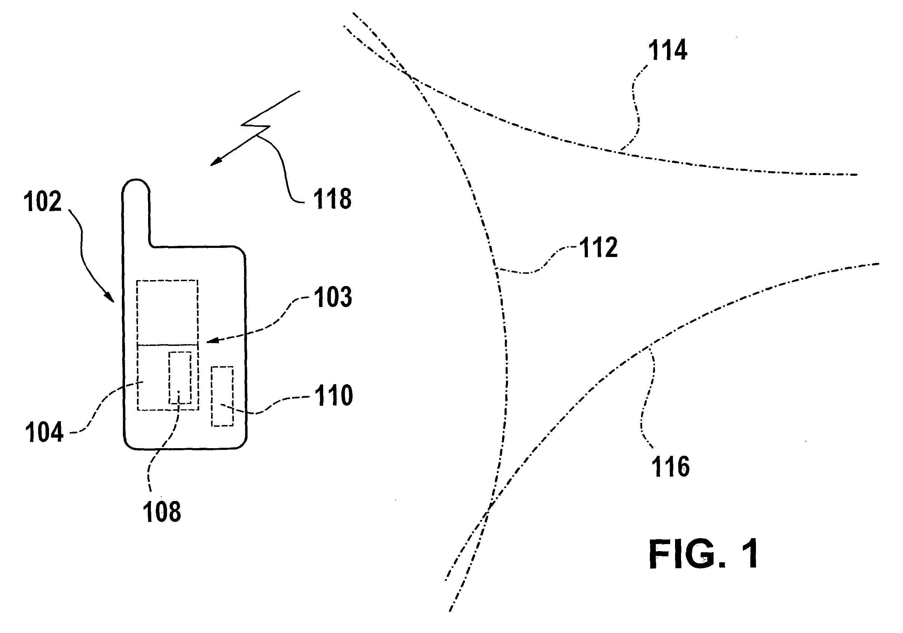

Referring to Fig. 1, mobile station [102] includes processor [110] and receiver system [103]. Where mobile station [102] is a multi-mode terminal having a receiver system capable of tuning between signals of two different systems, receiver system [103] may include one or more other receivers or receiver subsystems (not shown). Mobile station [102] may be a multi-mode mobile station, capable of operating, for example in a Global System for Mobile Telecommunications (GSM) system as well as a UMTS system. Mobile station [102] operates in serving cell [112] and periodically powers up to receives paging information [118] and/or to perform neighboring cell monitoring of, for example, neighboring cells [114] and [116]. During the reception of paging information [118], a subset of rake fingers [108] not being used for the reception of the paging information may be used for monitoring of neighboring cell [114] and/or neighboring cell [116], and/or any additional neighboring cells. Also, during times in a paging reception period between reception of paging information, while the rake receiver remains in a powered-up state but not receiving paging information, all or a subset of all rake fingers may be used for monitoring of the neighboring cells. After receiving all relevant paging and/or neighboring cell monitoring information needed, the mobile station powers down.

To reduce power consumption used by neighbor station monitoring and save battery lifetime, a determination of a mobile station's condition, i.e., stationary or non-stationary condition, is made. If a mobile station is located stationary for a period of time, that is, that the mobile stations has not moved compared to the surrounding cells, there is a lesser need to support mobility. This means that if a mobile station is able to determined if it is under stationary condition and a set of requirements or predetermined requirements regarding the coverage condition is obtained, the mobile station can reduce the power consumption used by neighbor station monitoring and save battery lifetime.

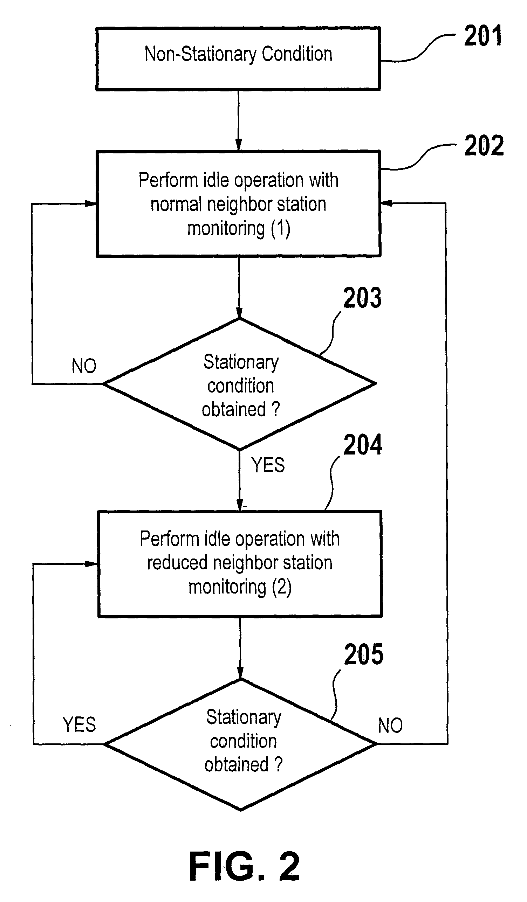

Referring to Fig. 2, the mobile station begins with the assumption that it is in a non-stationary condition [201]. It then performs normal neighboring cell monitoring [202]. The mobile station then determines whether it is stationary [203]. If the mobile station determines that it is non-stationary, then the mobile system continues to perform normal neighboring cell monitoring [202]. When the mobile station determines that is it stationary, then the mobile station performs reduced neighboring cell monitoring [204]. The mobile station then determines whether it is still stationary [205]. If the mobile station determines that it is stationary, then the mobile station continues to perform reduced neighboring cell monitoring [204]. If the mobile station determines that it is non-stationary, then the mobile station performs normal neighboring cell monitoring [202]. The mobile station continues to perform normal neighboring cell monitoring [202] until it determines that it is stationary and the chain of activity as described continues to occur.

Referring to Fig. 2, the downscaling of neighbor station monitoring is effected by a parameter which determined the downscaled requirement of neighbor station monitoring compared to the requirement set up for normal operation in non-stationary condition. This is referred to as NEIGHBOUR_STATION_MONITORING_DOWN_SCALE_FACTOR. NEIGHBOUR_STATION_MONITORING_DOWN_SCALE_FACTOR is a factor that determines the downscaled requirement of neighbor station monitoring compared to the requirement set up for normal operation in non-stationary condition. The higher that this factor is, then the lower the amount of power consumed.

A "stationary condition" of the mobile station may be determined as follows according to an embodiment of the present invention:

A stationary condition is defined to be where:

t > STATIONARY_CONDITION_TIME AND
CN (sc) - STATIONARY_CONDITION_HYSTERESIS > 0

Where:
t represents the time since the last cell reselection.

STATIONARY_CONDITION_TIME represents the threshold value for the time t; time t must obtain at least the threshold value before consideration of entering the stationary condition can occur.

CN (sc) represents path loss criterion used to determine if coverage condition is acceptable for entering stationary condition. CN (sc) is calculated for the serving cell from:

$$CN\ (sc) = Cl(sc) - STATIONARY\_CONDITION\_MIN\_VALUE$$

where STATIONARY_CONDITION_MIN_VALUE represents the threshold value in decibels which is the minimum offset value to Cl (sc) which must be obtained to start considering entering stationary condition.

Cl (sc) represents path loss criterion calculated from signal measurement for the serving cell or currently used cell. In the Global System Mobile (GSM) system, the value Cl (sc) is defined in ETSI EN 300 911 (GSM 05.08); sc refers to serving cell and Cl (sc) refers to the Cl value of the serving cell.

STATIONARY_CONDITION_HYSTERESIS represents hysteresis in decibels used together with CN (sc) to determine if coverage condition is acceptable for entering and exiting the stationary condition.

In other embodiments of the present invention, a stationary condition of a mobile unit may be determined using a built-in positioning detection function in a positioning system or multiple positioning systems integrated; one possible positioning system may be Geographic Positioning System (GPS). The various stationary metrics could also be combined.

A non-stationary condition may be determined as follows according to an embodiment of the present invention:

A stationary condition is defined to be when (1) cell reselection is carried out; or (2) CN(sc) < 0.

When the stationary condition of the mobile unit is no longer obtained, then time t is restarted and a non-stationary condition is resumed.

According to the present invention, the parameters: NEIGHBOUR_STATION_MONITORING_DOWN_SCALE_FACTOR, STATIONARY_CONDITION_TIME, STATIONARY_CONDITION_MIN_VALUE and STATIONARY_CONDITION_HYSTERESIS are preferably offered by the network broadcast on Broadcast Control Channel (BCCH) to obtain maximum flexibility and efficiency for the network topology. In other embodiments of the present invention, parameters may be fixed values residing in the mobile station.

An embodiment of the present invention, shown as follows, evidences reduced activity in idle mode in the GSM system and the resulting saving of power.

In the GSM-system, for example, the neighbor station monitoring includes Base Station Identification Code (BSIC)-decoding of neighbor cells, BCCH decoding of neighbor cells and BCCH decoding of serving cells.

According to GSM specifications, for neighboring cell monitoring (under non-stationary condition), the mobile station: attempts to decode a full BCCH data of serving cell at least every 30 seconds; attempts to decode the BCCH data block that contains the parameters affecting cell reselection for each of the 6 strongest non-serving cell BCCH carriers at least every 5 min; and attempts to check the BSIC (Base Station Identification Code) for each of the 6 strongest non-serving cell BCCH carriers at least every 30 seconds, to confirm that it is monitoring the same cell. See ETSI EN 300 911, Section 6.6.1 (Monitoring of Received Signal Lever and BCCH Data).

In a GSM system, when the NEIGHBOUR_STATION_MONITORING_DOWN_SCALE_FACTOR according to the present invention is set to 10, for example, neighbor station monitoring activities under stationary condition is as follows: the mobile station attempts to decode a full BCCH data of serving cell at least every 5 minutes; attempts to decode the BCCH data block that contains the parameters affecting cell reselection for each of the 6 strongest non-serving cell BCCH carriers at least every 50 minutes; and attempts to check the BSIC for each of the 6 strongest non-serving cell BCCH carriers at least every 5 min, to confirm that it is monitoring the same cell.

Looked at another way, the mobile station attempts to check the BSIC for each of the six strongest non-serving BCCH carriers at least every 5 minutes to confirm that they are still monitoring the same cell. Note that the BSIC will change if another base station is received on the BCCH carrier. If a change of the BSIC is detected, then the former non-serving carrier shall be treated as a new carrier and the BCCH data shall be redetermined.

The table below shows the reduction in active frames that can be obtained in the stationary mode compared to the non-stationary mode with a NEIGHBOUR_STATION_MONITORING_DOWN_SCALE_FACTOR of 10 according to the present invention. (A Time Division Multiple Access (TDMA) frame has a length of 60/13 seconds.)

|  | Non-stationary condition - active TDMA frames per min | Stationary condition - activity reduced by a factor 10 - active TDMA frames per min | Reduce activity under stationary conditions in [%] |
|---|---|---|---|
| Max PCH distance | 397 | 269 | 32 |
| Min PCH distance | 1289 | 1161 | 10 |

The calculated number of active frames in the table is based on the assumption that the mobile station is active for nine frames for BCCH and PCH (Paging Channel) decoding and is active for five frames for BSIC decoding.

When in idle mode, the mobile station also has to receive paging information regularly. The frames used for this paging reception by the mobile station are included in the values of the table above. The maximum and the minimum repetition interval, denoted Max PCH distance and Min PCH distance, respectively, between times when the mobile station must decode the Paging Channel (PCH) information is respectively 459 TDMA frames or 102 TDMA frames. The actual paging distance is typically configured by the service provider network. As is apparent, reduction in activity of up to a factor of 32 may be obtained, according to the example, with a concomitant rejection in power usage.

Preferably, the method according to the present invention is implemented in software which is executed by a processor [110]. The software changes occur in layer 1 of the GSM architecture. Alternatively, the method according tot he present invention may be implemented in hardware. As such software and hardware changes would be well-understood by one of skill in the art, they are not elaborated upon here.

Various embodiments within the scope of the present invention are possible. For example, the present invention may be applied to various frequency bands. Additionally, the present invention may be applied in other types of mobile communication systems. These and other variations are intended to be part of the present invention, the scope of which is intended to be limited only by the claims appended hereto.

**Claims**

1. A method for dynamic monitoring of neighboring cells by a mobile station in a cellular mobile communications network, **characterized in that**

   a determination is made regarding a level of mobility of the mobile station; and
   the mobile station is switched from a non-stationary mode to a stationary mode based on the determination, the mobile station performing an activity of the neighboring cell monitoring less frequently in the stationary mode than in the non-stationary mode.

2. The method according to claim 1, **characterized in that** the level of mobility determination is based on a time since a last cell reselection and a path loss value for a serving cell of the mobile station.

3. The method according to claim 2, **characterized in that** the level of mobility determination includes:

   a first comparison of the time since a last cell reselection with a reselection time threshold value; and
   a second comparison of a path loss criterion value with a stationary condition hysteresis value, the path loss criterion value being equal to a difference between the path loss value for the serving cell and a stationary condition minimum offset value to the path loss value.

4. The method according to claim 3, **characterized in that** the mobile station is switched from the non-stationary mode to the stationary mode when the first comparison indicates that the time since the last cell reselection is greater than the reselection time threshold value and the second comparison indicates that the path loss criterion value is greater than the stationary condition hysteresis value.

5. The method according to claim 3, **characterized in that** the mobile station is switched from the stationary mode to the non-stationary mode when a cell reselection takes place or the second comparison indicates that the path loss criterion value is less than the stationary condition hysteresis value.

6. The method according to any of the preceding claims, **characterized in that** the cellular mobile communications network is a Global System Mobile communications network and in the stationary mode the activity of neighboring cell monitoring includes the mobile station attempting to decode BCCH data of the current serving cell at least every five minutes.

7. The method according to claim 3, **characterized in that** the stationary condition hysteresis value, the time since last cell reselection, the reselection time threshold value, and a degree of less frequent monitoring in the stationary condition as compared to the non-stationary condition are provided by a network broadcast or are stored in the mobile station.

8. The method according to any of the preceding claims, **characterized in that** the mobile station functions within a Global System Mobile communications system and the mobile station performs an activity of monitoring of the serving cell, the activity of neighboring cell monitoring and the activity of serving cell monitoring includes BSIC-decoding of the respective cell or BCCH-decoding of the respective cell.

9. The method according to any of the preceding claims, **characterized in that** when the mobile station is in the stationary condition in a Global System Mobile system and a degree of less frequent monitoring is the standby condition is equal to an amount often, the mobile station attempts to decode the BCCH data whcih contains parameters affecting selection of the neighboring cells for each of a determined six relatively strongest neighboring cells at least every fifty minutes, the neighboring cells being near to the current serving cell; and the mobile station attempts to monitor the BSIC for each of the determined six relatively strongest neighboring cells acting as BCCH carriers every five minutes to confirm that the mobile station is monitoring the current serving cell.

10. A mobile station for carrying out the method according to any of the preceding claims, **characterized in that** the mobile station includes a processor for performing the determination and for actuating the switching from the stationary mode to the non-stationary mode or from the non-stationary mode to the stationary mode.

11. An article comprising a storage medium, the storage medium having a set of instructions, the set of instructions being capable of being executed by at least one processor to implement a method for dynamic monitoring of neighboring cells by a mobile station in a cellular mobile communications network, **characterized in that**

a determination is made regarding a level of mobility of the mobile station; and
the mobile station is switched from a non-stationary mode to a stationary mode based on the determination, the mobile station performing an activity of the neighboring cell monitoring less frequently in the stationary mode than in the non-stationary mode.

FIG. 1

**FIG. 2**

**European Patent Office**

**EUROPEAN SEARCH REPORT**

Application Number

EP 00 10 7714

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 812 119 A (NOKIA MOBILE PHONES LTD) 10 December 1997 (1997-12-10) * page 3, line 45 - line 50 * | 1,10,11 | H04Q7/32 |
| Y | * page 4, line 5 - line 56 * --- | 2-9 | |
| Y | ETSI TC-SMG: "EUROPEAN DIGITAL CELLULAR TELECOMMUNICATIONS SYSTEM (PHASE 2);RADIO SUBSYSTEM LINK CONTROL (GSM 05.08)" EUROPEAN TELECOMMUNICATION STANDARD,GSM 05.08, VERSION 4.10.0, 1 July 1994 (1994-07-01), pages 1-35, XP002092188 * page 13, line 3 - line 40 * ----- | 2-9 | |

|  | TECHNICAL FIELDS SEARCHED (Int.Cl.7) |
|---|---|
|  | H04Q |

The present search report has been drawn up for all claims

| Place of search | Date of completion of the search | Examiner |
|---|---|---|
| BERLIN | 21 August 2000 | Palencia Gutiérrez,C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 10 7714

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2000

| Patent document cited in search report | | Publication date | Patent family member(s) | | Publication date |
|---|---|---|---|---|---|
| EP 0812119 | A | 10-12-1997 | US | 6067460 A | 23-05-2000 |
| | | | CN | 1183702 A | 03-06-1998 |

EPO FORM P0459

For more details about this annex : see Official Journal of the European Patent Office, No. 12/82